# EUROPEAN PATENT SPECIFICATION

(11) **EP 1 849 822 B1**
(45) Date of publication and mention of the grant of the patent: **24.09.2008**
(21) Application number: 05770364.7
(22) Date of filing: 09.08.2005
(51) Int. Cl.: C08J 11/04, C08J 3/22, C08K 3/22, C08K 3/26

(54) **METHOD OF INHIBITING HYDROCHLORIC ACID FROM GENERATING DURING RECYCLING OF WASTE PLASTIC**
VERFAHREN ZUR INHIBIERUNG DER BILDUNG VON SALZSÄURE BEIM RECYCLING VON KUNSTSTOFFABFÄLLEN
MÉTHODE D'INHIBITION DE L'APPARITION D'ACIDE CHLORHYDRIQUE AU COURS DU RECYCLAGE DE REBUTS DE MATIÈRES PLASTIQUES

(30) Priority: 14.02.2005 JP 2005036038; 14.02.2005 JP 2005036082
(43) Date of publication of application: 31.10.2007
(73) Proprietor: Kabushiki Kaisha Meiji Gomu Kasei, Tokyo 160-0023 (JP)
(72) Inventor: SHIOYA, Kei, c/o Kabushiki Kaisha Meiji Gomu Kasei, Ashigarakami-gun, Kanagawa 2580026 (JP); MIYAYAMA, Tetuya, c/o K.Kaisha Meiji Gomu Kasei, Ashigarakami-gun, Kanagawa 2580026 (JP); TANI, Miho, c/o Kabushiki Kaisha Meiji Gomu Kasei, Ashigarakami-gun, Kanagawa 2580026 (JP); KAZAMA, Ichirou, c/o K. Kaisha Meiji Gomu Kasei, Ashigarakami-gun, Kanagawa 2580026 (JP); YAGUCHI, Masaru, c/o K. Kaisha Meiji Gomu Kasei, Ashigarakami-gun, Kanagawa 2580026 (JP); TERANO, Kunihiro, c/o K. Kaisha Meiji Gomu Kasei, Ashigarakami-gun, Kanagawa 2580026; (JP)
(74) Representative: Neugebauer, Jürgen
(86) International application number: PCT/JP2005/014574
(87) International publication number: WO 2006/085400

(56) References cited:
- JP-A- 7 118 314
- JP-A- 2000 007 823
- US-B1- 6 525 158
- DATABASE WPI Week 200221 Derwent Publications Ltd., London, GB; AN 2002-158463 XP002467816 -& JP 2001 302809 A (SUMIKA COLOR KK) 31 October 2001 (2001-10-31)
- DATABASE WPI Week 200159 Derwent Publications Ltd., London, GB; AN 2001-532655 XP002467819 -& JP 2001 191051 A (YOSHIKAWA T) 17 July 2001 (2001-07-17)

## Description

The present invention relates to a method of inhibiting generation of hydrochloric acid during use of discarded plastic products as a recycling plastic material.

### Background Art

Since enforcement of the Law for Promotion of Selective Collection and Recycling of Containers and Packaging (which will hereinafter be called "Containers and Packaging Recycling Law"), use of materials obtained by recycling of discarded containers and wrapping according to the Containers and Packaging Recycle Law has recently been demanded. In addition, with increasing awareness of natural environmental protection in recent years, waste plastic materials of general plastic products other those classified as discarded containers and wrapping based on the Containers and Packaging Recycling Law have recently be reused as recycled materials and movement for promoting recycling of plastic products has been more active. Discarded containers and wrapping which are objectives of the Containers and Packaging Recycling Law and discarded general plastic products can be used in repetition after recycling and such recycling plastic materials have been utilized in various fields.

Discarded containers and wrapping in accordance with the Containers and Packaging Recycling Law are collected together without sorting them according to their raw materials so that they include plastic containers made of various materials. Recycling plastic materials are therefore made of a mixture of various materials so that commercial products made of such recycling plastic materials inevitably have reduced bending strength, impact strength, and welding strength. They are therefore different in this point from waste plastic materials of general plastic products collected after sorting by raw materials.

When discarded containers and wrapping made of plastic or discarded general plastic products are reused as recycling plastic materials, they may be sorted by the raw material. In sorting them by the raw material, collected waste plastics, that is, so-called plastic garbage is shredded into pieces if they are bags, manually sorted based on the visual observation of the material, granulated, sorted out by using an infrared ray, washed, and dehydrated-dried after centrifugal sorting or the like, whereby a recycling plastic material can be obtained. In such a manner, however, they cannot be sort out completely by the material.

Recycling plastic materials which have been sorted out can be used as raw materials after two steps.
They are a step (primary step) for agglomerating or pelletizing the plastic material, which has been sorted, and a step of injection molding or extrusion of the agglomerated or pelletized material into a product (secondary step). In the primary step, granulate (which will hereinafter be called "fluff") of waste plastics is mashed into an agglomerate, or pelletized using a twin-screw extruder. When the fluff is mashed into an agglomerate, molding or forming is usually performed at about from 100 to 130°C. When the fluff is pelletized by using a twin screw extruder, molding or forming is usually performed at about from 140 to 180°C. When injection molding is performed in the secondary step to prepare a product, it is the common practice to mold the agglomerate or pellets at a temperature as high as from about 200 to 250°C.

A fluff which has finished washing and dehydration steps is usually employed as a raw material, but even after the dehydration-drying step such as centrifugal dehydration, water often remains between films. Moisture contained much in a fluff or high molding or forming temperature is generally known to promote generation of hydrochloric acid from a hydrochloric-acid-containing polymer mixed in the fluff. A recycling plastic material is therefore used as a raw material under the conditions easily inducing generation of harmful hydrochloric acid.

Recycling of the above-described discarded containers and wrapping made of plastic or discarded general plastic products is recommended by the national policy for the purpose of environmental protection. In order to achieve this, our country provides subsidies for material recycling, chemical recycling, thermal recycling or the like recycling, but no sufficient progress has been made in material recycling.

One of the reasons for such a slow progress of material recycling is presumed to exist in the following problem. Described specifically, most of the conventional recycling plastic materials contain polyvinyl chloride (PVC). A stabilizer is added during molding or forming of PVC to suppress the generation of hydrochloric acid which will otherwise occur by exposure to heat or ultraviolet light. The stabilizer however loses its function with the passage of time. When waste plastic of the conventional plastic products is used as a recycling plastic material, hydrochloric acid is therefore generated during molding or forming and rusts a manufacturing machine including a mold.

As described in Japanese Patent Laid-Open No. 2001-191051, a manufacturing method of a dechlorinated waste plastic is proposed. In this method, waste plastic is made usable as a boiler fuel, reducing agent for blast furnace, or calming agent in steel making by adding metal oxides, metal carbonates or the like to granulated waste plastics in an amount at least equivalent to that of chlorine contained in the granulated waste plastics, and fixing hydrogen chloride generated by thermal decomposition of polyvinyl chloride, as a metal chloride, in the molten plastic.

### Patent Document 1: Japanese Patent Laid-Open No. 2001-191051

### Disclosure of the Invention

### Problems to be solved by the Invention

The manufacturing method of dechlorinated waste plastic as described in the above-described document however uses the resulting waste plastic as a boiler fuel, raw material for blast furnace, or calming agent for steel making and even metal oxides, metal carbonates and the like remaining in the waste plastic are harmless insofar as it is used for such a purpose.

It is not known whether such waste plastics used as recycling plastic materials can inhibit the rust of manufacturing machines including mold. Thus, in spite of the presence of the problem that hydrochloric acid generated from PVC contained in waste plastics rusts the machines, a method capable of inhibiting generation of hydrochloric acid has not yet been found.

An object of the present invention is to provide a method of inhibiting generation of hydrochloric acid which will otherwise be generated when a discarded container and wrapping made of a plastic or discarded material of a general plastic product is used as a recycling plastic material or pelletized.

### Means for solving the Problems

The present invention has the following constitution in order to accomplish the above-described object. Described specifically, a method of inhibiting generation of hydrochloric acid during recycling of waste plastics according to claim 1 of the present invention comprises, when waste plastics such as discarded containers and wrapping made of plastic or discarded materials of general plastic products are used as a recycling plastic material, mixing 0.1 wt.% or greater of an acid acceptor with the recycling plastic material. The acid acceptor is in the form of a master batch obtained by mixing the acid acceptor and a base resin.

As the base resin, an ethylene-ethyl acrylate copolymer or low density polyethylene is used.

As the acid acceptor, mixed use of magnesium oxide and hydrotalcite is used, of which use of a mixture containing magnesium oxide at a greater ratio is more preferred. A ratio of the acid acceptor to the base resin is preferably 40 wt.% or less. Further acid acceptors are selected from one or more of calcium carbonate, magnesium carbonate, calcium hydroxide, and magnesium silicate.

Employment of the above-described constitution makes it possible to inhibit generation of hydrochloric acid and prevent rusting of a manufacturing machine such as mold even if waste plastics such as discarded containers and wrapping made of plastic and discarded materials of general plastic products are used as recycling plastic materials. Particularly when an acid acceptor is added in the form of a master batch, dispersibility can be heightened and in proportion to the heightened dispersibility, the amount of it can be reduced compared with the addition of it in the powder form.

The present inventors have proceeded with various further researches. As a result, it has been found that addition of an acid acceptor to a recycling plastic material is effective for removing an odor or water. When the fluff is pelletized, removal of water makes it possible to inhibit the generation of hydrochloric acid and at the same time inhibit foaming due to water contained in it, thereby increasing the specific gravity of the pellet.

### Advantage of the Invention

Since the generation of hydrochloric acid which will otherwise be generated at the time of molding or forming can be inhibited by the addition of the acid acceptor during recycling, waste plastics such as discarded containers and wrapping made of plastic and waste products of general plastic products, which cannot so far be used because of PVC mixed therein, can be used as recycling plastic materials or can be pelletized.

Moreover, addition of the acid acceptor during recycling contributes to the removal of an odor so that the recycling plastic materials can also be used for food packages and the like. By removing water, foaming can be suppressed and specific gravity of the pellets can be increased. This makes it possible to reduce the storage area of recycling plastic materials, improve the efficiency of transportation and heighten the dynamical strength of the molded or formed product.

The object of the present invention to prevent rusting of manufacturing machines even while using waste plastics as a recycling plastic material can be accomplished by a markedly simple constitution and at the same time, at a low cost.

### Brief Description of the Drawings

[FIG. 1] FIG. 1 is a schematic view of a can illustrating a testing method.
[FIG. 2] FIG. 2 is a photograph of pellets not containing an acid acceptor.
[FIG. 3] FIG. 3 is a photograph of pellets containing an acid acceptor.
[FIG. 4] FIG. 4 is a photograph of water remaining in the pellet just after molding or forming, in which a vinyl bag on the left side has therein pellets added with an acid acceptor and a vinyl bag on the right side has therein pellets not added with an acid acceptor.
[FIG. 5(a)] FIG. 5(a) is a photograph showing the dispersed state of an acid acceptor in the molded or formed product to which the acid acceptor powder has been directly added.
[FIG. 5(b)] FIG. 5(b) is a photograph showing the dispersed state of an acid acceptor in the molded or formed product to which the acid acceptor has been added in the form of a master batch.
[FIG. 6] FIG. 6 is a photograph showing the dispersed state of an acid acceptor which has been granulated in a super mixer.
[FIG. 7] FIG. 7 is a photograph showing the dispersed state of an acid acceptor in the form of a master batch obtained using a twin screw extruder.

### Legends

1: Lid
2: Can body
3: Sample
4: Reagent

### Best Mode for Carrying Out the Invention

When waste plastics are used as recycling plastic materials, 0.1 wt.% or greater of an acid acceptor in the form of a master batch is added to the recycling plastic materials. Addition of 0.1 wt.% or greater of the acid acceptor in the form of a master batch can prevent rusting of the manufacturing machine even if the waste plastics are used as recycling plastic materials.

### Example 1 (Reference Example)

One example of the present invention having the above-described constitution will next be described. Evaluation of an acidity test was performed as described below.

Three sample materials were prepared by adding magnesium oxide (MgO) in amounts of 1 wt.%, 0.1 wt.% and 0.01 wt.% respectively as an acid acceptor (stabilizer) to city dusts (which will hereinafter be abbreviated as "CD") which were discarded containers and wrapping made of plastic or discarded general plastic products containing 0.1% of PVC and then tumbling the resulting mixtures. As comparative sample materials, CD and polypropylene (PP) to each of which no acid acceptor had been added were prepared. By using a 50-t injection molder, these sample materials and comparative sample materials were molded at 220°C and as a result, five test samples were obtained, respectively.

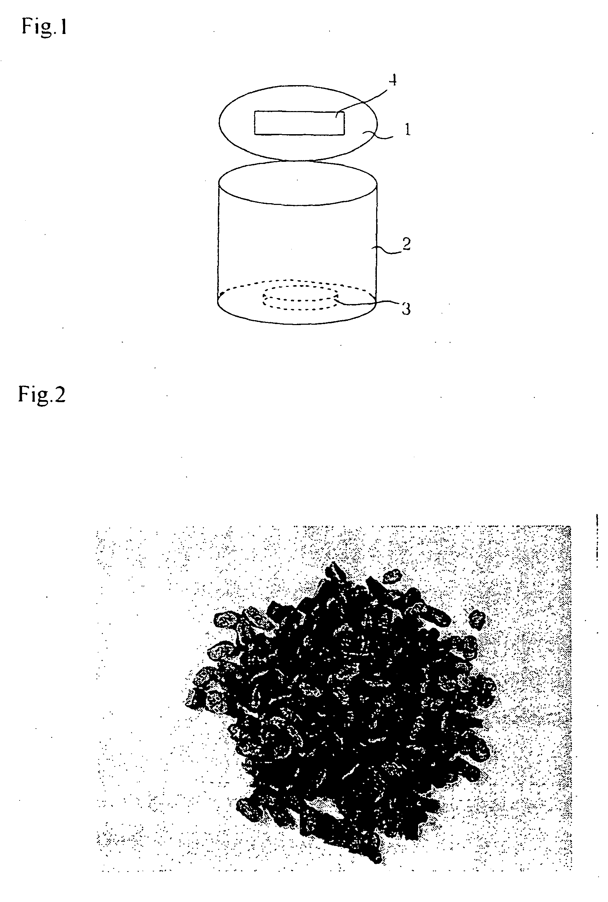

The acidity of each of the test samples was measured. As illustrated in FIG. 1, a sample 3 was charged in a can body 2 with an openable and closable lid immediately after injection and after the lid 1 was closed, the can was left to stand for 8 hours or greater at normal temperature. A reagent 4 for measuring pH such as litmus paper was attached to the back side of the lid 1. The can was left to stand as described above while closing the lid 1 and the acidity was measured using the reagent 4. The measurement was performed by comparing a changed color with the standard colors of the reagent, and selecting the pH of the standard color which had coincided with the changed color.
Measurement results are shown in Table 1.

**[Table 1]**

| Sample | Only PP | CD + 1% of acid acceptor | CD + 0.1% of acid acceptor | CD + 0.01% of acid acceptor | Only CD |
|---|---|---|---|---|---|
| Results | pH: neutral (no change in the color of the reagent was found) | pH: neutral (no change in the color of the reagent was found) | pH: 4.0 | pH: from 4.0 to 3.8 | pH: 3.8 |

| | | | | | |
|---|---|---|---|---|---|
| (Note: unit: wt.%) | | | | | |

As is apparent from Table 1, addition of an acid acceptor in an amount of 1 wt.% or greater makes it possible to inhibit generation of hydrochloric acid. It is needless to say that the addition of the acid acceptor is effective not only when discarded containers and wrapping made of plastic or discarded general plastic products are used as recycling plastic materials but also when they are pelletized. Although not shown in the results, hydrotalcite (Mg₆Al₂(OH)₁₆CO₃·4H₂O) or zinc magnesium (MgZn) also brings about similar effects as an acid acceptor, and a 2500-t injection molder, 050 single screw extruder or 030 twin screw extruder also brings about similar effects.

### Example 2 (Reference Example)

Description will next be made of the use of ion chromatography for measuring the acidity more precisely. The acid acceptor is usually in the powder form. As the acid acceptor, therefore, each powder of magnesium oxide, hydrotalcite, calcium carbonate, magnesium carbonate, calcium hydroxide and magnesium silicate was employed.

Dispersibility is however poor when the acid acceptor in the powder form is tumbled because the powder has high aggregation property. In addition, the acid acceptor in the powder form is not suited for use in the recycling of plastic materials because it has a small bulk specific gravity and therefore is bulky. CD contains a mixture of various materials such as low density polyethylene (LDPE), polypropylene (PP), polyethylene terephthalate (PET), nylon and polyvinyl chloride (PVC).

This means that CD contains a mixture of various materials different in melting point. One of these materials contained in CD is PVC, and PVC is presumed to be a cause for generating hydrochloric acid. When CD is used as a recycling plastic material, generation of hydrochloric acid is conventionally inhibited by tumbling the CD and an impregnation agent (usually, an oil) and then tumbling only the acid acceptor. This conventional method however causes a bridging phenomenon in a hopper or the like upon tumbling.

Use of the acid acceptor in the powder form has problems such as inferior handling and necessity of a large amount of it because of high aggregation property. In addition, the acid acceptor inevitably remains in the molded or formed product because it is not melted. Even if generation of hydrochloric acid is inhibited, the acid acceptor remaining as a foreign matter causes a reduction in impact resistance of the molded or formed product.

In order to produce a sufficient effect by the addition of a small amount of an acid acceptor to overcome the above-described problems, the present inventors have carried out an investigation. As a result, it has been found that the above-described problems can be overcome by the addition of an acid acceptor in the form of a master batch. When it is added in the form of a master batch, the melting point of it is a key point. Compared with materials contained in CD, PVC has a particularly low melting point. In order to inhibit generation of hydrochloric acid from PVC, the master batch containing an acid acceptor must be melted or dispersed in a low temperature range simultaneously or prior to melting or dispersion of PVC.

In other words, a material having a lower melting point than that of PVC must be selected as a base resin for the master batch of an acid acceptor. In Examples, ethylene-ethyl acrylate copolymer (EEA) and low density polyethylene (LDPE) are employed as the material having a low melting point. As shown in Table 2, it has been confirmed that when the effect of an acid acceptor added in the form of a master batch and the effect of the same amount of the acid acceptor added in the powder form are compared, the former is highly effective for inhibiting generation of hydrochloric acid from CD.

The master batch must have adequate dispersibility in order to heighten the inhibition effect of the generation of hydrochloric acid. To satisfy the dispersibility, selection of a proper base resin and also sufficient fluidity of the resin (MFR) must be considered. The fluidity of EEA or LDPE as the base resin is not the same, but the base resin has preferably MFR of 5 or greater.

When the master batch is prepared, the dispersibility of the acid acceptor must be heightened. It is therefore preferred to use the base resin in the powder form rather than in the pellet form and tumble the base resin powder and acid acceptor powder. Use of the base resin and acid acceptor both in the powder form makes it possible to sufficiently mix and disperse the acid acceptor powder in the resin powder before molding pressure or temperature is applied thereto during the preparation of a master batch.

### (Preparation process of evaluation sample)

A preparation process of an evaluation sample to be used in Examples will next be described. First, CD and an acid acceptor were mixed, followed by purging in a molder. The cylinder temperature of the molder was from 200 to 220°C and the retention time in the cylinder was 180 seconds. As the acid acceptor, magnesium oxide, hydrotalcite, calcium carbonate, magnesium carbonate, calcium hydroxide, and magnesium silicate were used respectively. The magnesium oxide in the form of master batch was also subjected to measurement. An ethylene-ethyl acrylate copolymer (EEA) was used as a base resin of the master batch.

### (Measuring method)

After purging, the resulting resin was frozen by using liquid nitrogen and then granulated into a sample.

### (Trapping of hydrochloric acid thus generated)

Hydrochloric acid thus generated was trapped in 3 ml of a trapping solution (1.8M Na₂CO₃/1.7 mM NaHCO₃). The sample was heated with a sample burner "QF02 (product of Mitsubishi Chemical) under the following conditions: heating temperature: 240°C, heating time: 3 minutes, atmosphere: 250/100 ml/min of oxygen/argon, and amount of the sample ranging from 0.3 to 0.4g

### (Measurement)

Measurement was performed using ion chromatography suited for accurate measurement under the following conditions: column: ASA-SC, flow rate: 1.5 m/min, and eluent: 1.8 mM Na₂CO₃/1.7 mM NaHCO₃. Analysis results are shown in Table 2.

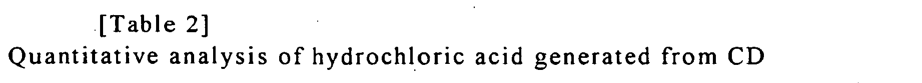

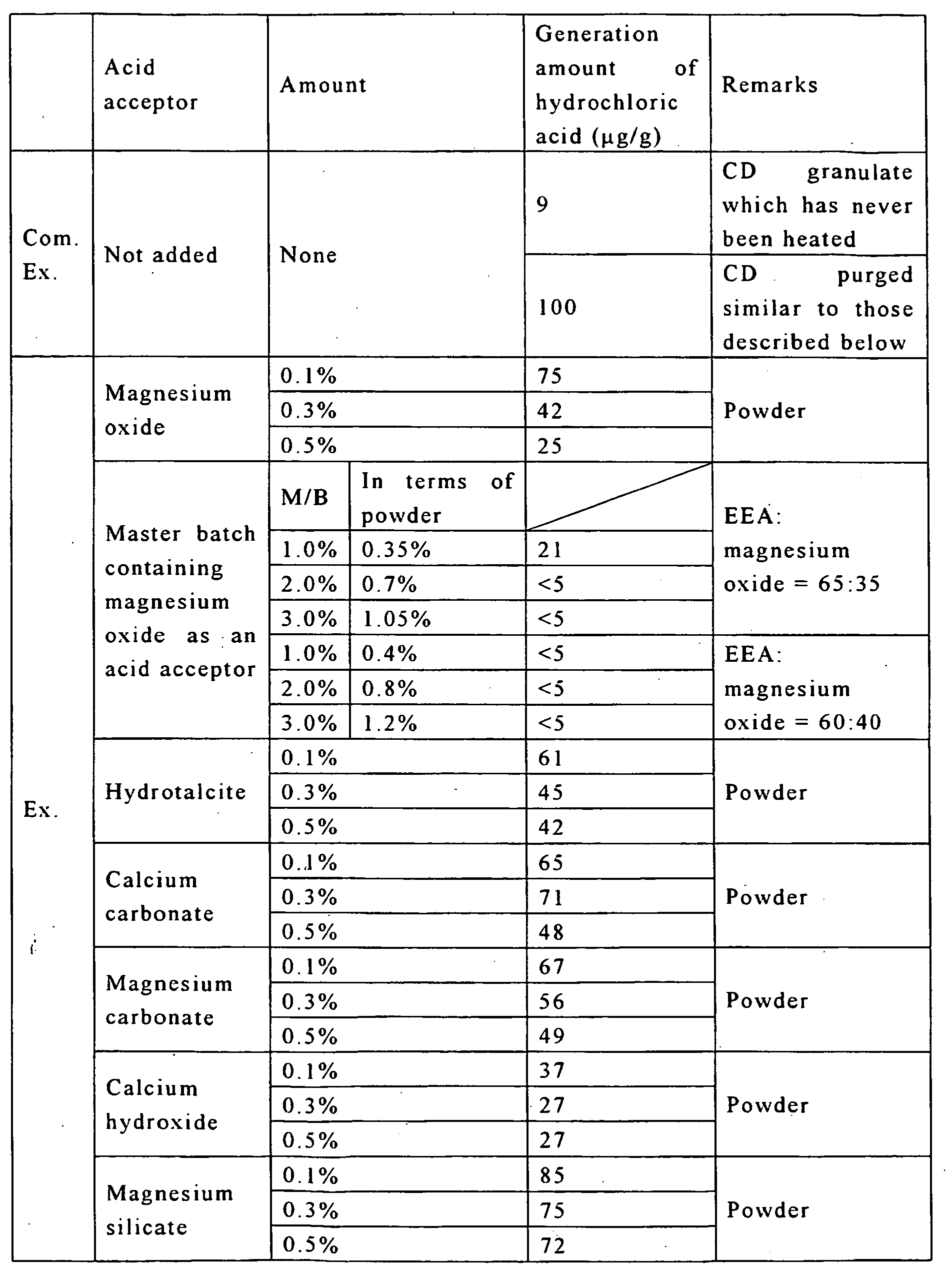

The lower limit of quantitative analysis was calculated with three times the detection concentration of a black test as a detection lower limit concentration and was set at 5 µg/g.

The above-described measurement results have revealed that compared with Comparative Examples in which no acid acceptor had been added, addition of an acid acceptor, even in an amount of 0.1 wt.%, can suppress the generation amount of hydrochloric acid. Accurate measurement was impossible in Example 1 in which measurement was performed using a reagent, however, measurement using ion chromatography has revealed that even addition of a small amount of an acid acceptor is effective for reducing the generation amount of hydrochloric acid.

### Example 3

In Example 3, a generation amount of hydrochloric acid was measured using a more accurate method. In this Example, evaluation was performed using magnesium oxide powder and hydrotalcite powder singly and as a mixture.

### (Preparation process of evaluation sample)

First, as raw materials before pelletization, fluffs washed, subjected to centrifugal dehydration and dried for 10 minutes, 20 minutes and 30 minutes, respectively, in a drying furnace of 50°C were prepared. Master batches were then prepared using magnesium oxide powder, hydrotalcite powder and a mixture thereof as an acid acceptor respectively, and low density polyethylene (LDPE) as a base resin.

### (Measuring method)

Each of the raw materials after drying was charged in a twin screw extruder (50 mm in diameter, twin screw type with two screws rotating in the same direction, L/D-28) and concentration of a hydrochloric acid gas emitted from the extrusion outlet was measured. The cylinder temperature of the twin screw extruder was from 140 to 160°C.

### (Measurement)

By using a detection tube capable of offering accurate measurement, the concentration of hydrochloric acid at the extrusion outlet was measured. The measurement results are shown in Table 3.

**[Table 3]**

| LDPE | | Master | | | | batch |
|---|---|---|---|---|---|---|
| [unit: ppm] | | | | | | |
| Item | | No acid acceptor added (Comparative Example) | 3 PHR added (master batch) | | | |
| | | | Magnesium oxide | Magnesium oxide : hydrotalcite = 75:25 | Magnesium oxide : hydrotalcite = 50:50 | Hydrotalcite |
| Drying for 10 minutes | 1 | 1000 or greater | 80 | 15 | 30 | 350 |
| | 2 | 1000 or greater | 50 | 50 | 40 | 400 |
| | 3 | 1000 or greater | 50 | 30 | 50 | 350 |
| | 4 | 1000 or greater | 100 | 30 | 40 | 400 |
| | 5 | 1000 or greater | 70 | 20 | 20 | 500 |
| | 6 | 1000 or greater | 30 | 20 | 30 | 450 |
| | 7 | 1000 or greater | 20 | 18 | 50 | 450 |
| | 8 | 1000 or greater | 50 | 10 | 40 | 200 |
| | 9 | 1000 or greater | 20 | 15 | 30 | 450 |
| | 10 | 1000 or greater | 40 | 20 | 40 | 400 |
| | MAX | 1000 or greater | 100 | 50 | 50 | 500 |
| | MIN | 1000 or greater | 20 | 10 | 20 | 200 |
| | AVE | 1000 or greater | 51 | 22.8 | 37 | 395 |
| Drying for 20 minutes | 1 | 1000 or greater | 17 | 5 | 18 | 300 |
| | 2 | 1000 or greater | 12 | 8 | 20 | 350 |
| | 3 | 1000 or greater | 10 | 8 | 15 | 200 |
| | 4 | 1000 or greater | 30 | 5 | 13 | 250 |
| | 5 | 1000 or greater | 5 | 10 | 15 | 100 |
| | 6 | 1000 or greater | 10 | 2 | 5 | 250 |
| | 7 | 1000 or greater | 7 | 0 | 7 | 250 |
| | 8 | 1000 or greater | 12 | 5 | 0 | 300 |
| | 9 | 1000 or greater | 5 | 3 | 2 | 270 |
| | 10 | 1000 or greater | 12 | 5 | 10 | 270 |
| | MAX | 1000 or greater | 30 | 10 | 20 | 350 |
| | MIN | 1000 or greater | 5 | 0 | 0 | 100 |
| | AVE | 1000 or greater | 12 | 5.1 | 10.5 | 254 |
| Drying for 30 minutes | 1 | 1000 or greater | 5 | 3 | 15 | 150 |
| | 2 | 1000 or greater | 3 | 5 | 7 | 200 |
| | 3 | 1000 or greater | 7 | 2 | 12 | 150 |
| | 4 | 1000 or greater | 30 | 0 | 10 | 170 |
| | 5 | 1000 or greater | 20 | 2 | 10 | 100 |
| | 6 | 1000 or greater | 12 | 5 | 18 | 180 |
| | 7 | 1000 or greater | 6 | 10 | 0 | 200 |
| | 8 | 1000 or greater | 12 | 2 | 5 | 300 |
| | 9 | 1000 or greater | 4 | 2 | 10 | 180 |
| | 10 | 1000 or greater | 2 | 3 | 20 | 150 |
| | MAX | 1000 or greater | 30 | 10 | 20 | 300 |
| | MIN | 1000 or greater | 2 | 0 | 0 | 100 |
| | AVE | 1000 or greater | 10.1 | 3.4 | 10.7 | 178 |

From the above measurement results, it has been found that compared with Comparative Example in which no acid acceptor is added, a generation amount of hydrochloric acid is markedly small when an acid acceptor is added. It has also been found that when effects brought by magnesium oxide and hydrotalcite are compared, magnesium oxide is more effective than hydrotalcite and magnesium oxide used in combination with hydrotalcite is more effective than single use of magnesium oxide.

### Example 4

### (Preparation of master batch containing acid acceptor)

It has already been described in Example 2 that addition of an acid acceptor in the form of a master batch improves dispersibility of it. Addition of an acid acceptor in the form of a master batch is proved to have the following effect further. Described specifically, pellets prepared from a fluff by using a twin screw extruder in the primary step, pellets prepared by adding an acid acceptor in the form of a master batch as in Example 2 or 3, and pellets prepared without adding the master batch of an acid acceptor differ each other in the state of pellets thus prepared.

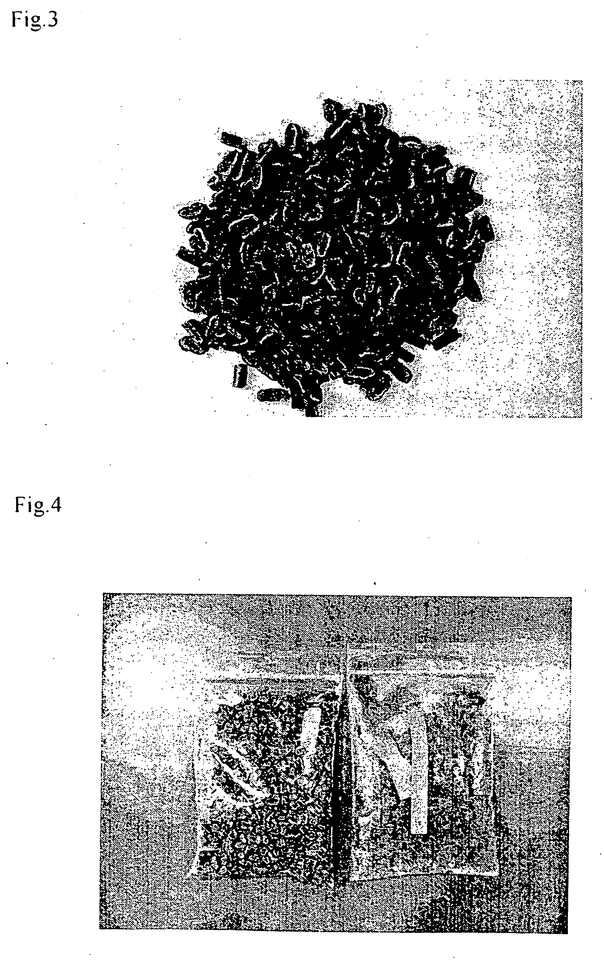

Inside of the pellets prepared without adding the master batch of an acid acceptor, holes due to a foaming phenomenon which is presumed to result from a hydrochloric acid gas or evaporation of water are observed (refer to FIG. 2). In the pellets to which the master batch of an acid acceptor is added, foaming is suppressed so that no holes are observed from them (refer to FIG. 3). Thus, addition of an acid acceptor in the form of a master batch increases the specific gravity of pellets, decreases the area required for storage, and owing to a decrease in the bulk, enables efficient transportation. In addition, it is presumed to contribute to improvement of dynamic strength of the molded or formed product.

### (Removal of water)

The remaining condition of water in the pellet was evaluated in the cases where the master batch of an acid acceptor was added and was not added, respectively. It was evaluated by hermetically sealing the pellets just after pelletization in a vinyl bag and visually observing the clouding degree in the vinyl bag. FIG. 4 is a photograph of two bags for comparison in the clouding degree of the vinyl bag in which pellets were hermetically sealed. The bag on the left side of FIG. 4 contains pellets to which the master batch of an acid acceptor was added, while the bag on the right side of FIG. 4 contains pellets to which no master batch of an acid acceptor was added.

As illustrated in FIG. 4, when the master batch of an acid acceptor is not added, pellets cannot be recognized because the inner surface of the vinyl bag is clouded with water vapor generated from the pellets, which obscures them from view. When the master batch of an acid acceptor is added, on the other hand, the inner surface of the vinyl bag is not clouded with water vapor generated from the pellets so that pellets can be recognized. Thus, evaluation results of presence or absence of clouding of a vinyl bag suggest that the master batch of an acid acceptor is also effective for the removal of water remained in the fluff.

### Example 5

### (Addition method of acid acceptor)

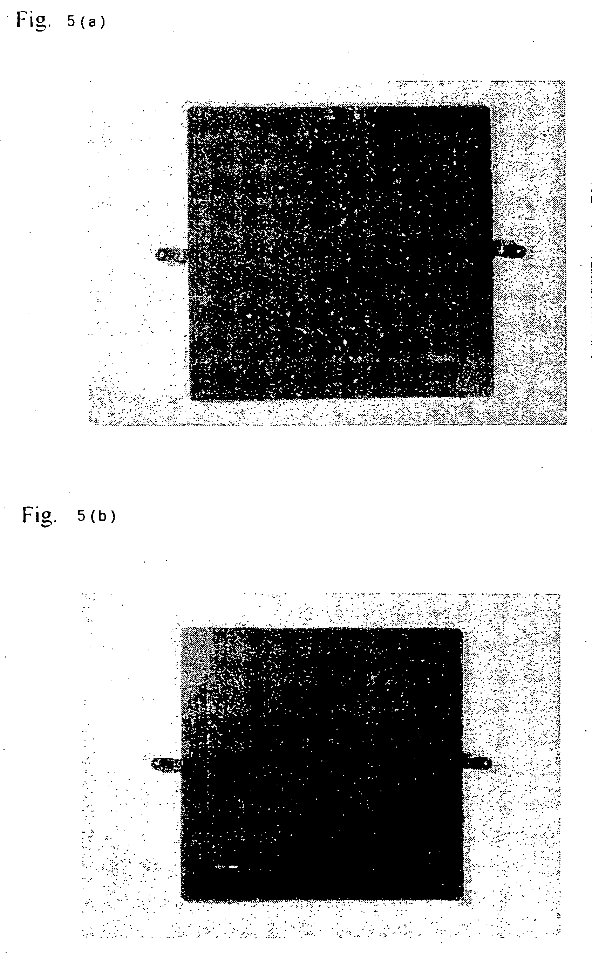

In the next place, the addition method of an acid acceptor was investigated in detail. A shredded container material was used as the raw material. As described above, the acid acceptor added in the form of a master batch exhibits better dispersibility than that added directly. Comparison between these two cases is shown in FIG. 5.

As is apparent from FIG. 5, many agglomerates which are presumed to appear owing to insufficient dispersion of the acid acceptor are observed as white spots (refer to FIG. 5(a)) when the acid acceptor powder is added directly, while there appear no agglomerates and no white spots are observed (refer to FIG. 5(b)) when the acid acceptor is added in the form of a resin master batch. Because of difference in dispersibility, addition of an acid acceptor in the form of a resin master batch is presumed to be more effective for inhibiting generation of hydrochloric acid compared with the direct addition even if the amount of the acid acceptor is equal.

### Example 6

### (A ratio of acid receptor to base resin)

It has been understood from the above Examples that addition of an acid acceptor inhibits generation of hydrochloric acid and the inhibitory effect is greater when a mixture of acid acceptors is used. A mixing ratio of acid acceptor to base resin was next evaluated. The mixing ratio of an acid acceptor was evaluated by measuring the concentration of hydrochloric acid thus generated.

### (Preparation method of evaluation sample)

First, a master batch of an acid acceptor was prepared. The master batch of an acid acceptor was prepared by using a mixture of 75 wt.% of magnesium oxide powder and 25 wt.% of hydrotalcite powder as an acid acceptor and each of low density polyethylene (LDPE) and ethylene-ethyl acrylate copolymer (EEA) as a base resin, and changing the amounts of the acid acceptor relative to the base resin.

When the amount of the acid acceptor was 40 wt.% or less, a master batch was prepared using a twin screw extruder, while when the amount exceeded 40 wt.%, the mixture was granulated using a super mixer. When the amount of the acid acceptor exceeds 40 wt.%, a master batch cannot be prepared in a twin screw extruder so that in this case, a super mixer is employed. As a raw material, pellets obtained by pelletizing a fluff of a recycling plastic material in a twin screw extruder were employed.

### (Measuring method)

The pellets of the recycling plastic material and the master batch 3PHR of the acid acceptor were charged in a single-screw extruder (diameter: 50, L/D=28, cylinder temperature: from 170 to 200°C) and the concentration of hydrochloric acid in a gas emitted from an extrusion outlet was measured.

### (Measurement)

A detection tube capable of offering accurate measurement was installed at the outlet of the single screw extruder and the concentration of hydrochloric acid at the extrusion outlet was measured. Measurement results are shown in Table 4.

**[Table 4]**

| [unit: ppm] | | | | | | | |
|---|---|---|---|---|---|---|---|
| Item | | No acid acceptor added | 3PHR added | | | | |
| | | | LDPE: 80 | LDPE: 65 | EEA: 60 EEA: 60 | EEA:55 | LDPE: 45 |
| | | | Acid acceptor: 20 | Acid acceptor: 35 | Acid acceptor: 40 | Acid acceptor: 45 | Acid acceptor: 55 |
| Pellets | 1 | 400 | 5 | 0 | 0 | 350 | 400 |
| | 2 | 450 | 7 | 1 | 0 | 370 | 350 |
| | 3 | 450 | 10 | 3 | 0 | 400 | 370 |
| | 4 | 400 | 8 | 2 | 0 | 350 | 400 |
| | 5 | 480 | 15 | 2 | 0 | 430 | 450 |
| | 6 | 350 | 5 | 0 | 1 | 330 | 400 |
| | 7 | 400 | 8 | 5 | 0 | 450 | 310 |
| | 8 | 440 | 5 | 2 | 1 | 300 | 280 |
| | 9 | 300 | 10 | 0 | 0 | 320 | 400 |
| | 10 | 400 | 7 | 0 | 0 | 380 | 350 |
| | MAX | 480 | 15 | 5 | 1 | 450 | 450 |
| | MIN | 300 | 5 | 0 | 0 | 300 | 280 |
| | AVE | 407 | 8 | 1.5 | 0.2 | 368 | 371 |

| | | | | | | | |
|---|---|---|---|---|---|---|---|
| Acid acceptor: magnesium oxide:hydrotalcite = 75:25 | | | | | | | |

An increase in the ratio of acid acceptor to base resin seems to be effective for inhibiting generation of hydrochloric acid, but the above-described results have revealed that an increase in the ratio of the acid acceptor does not always inhibit the generation of hydrochloric acid and even a deterioration in the effect occurs at a ratio of it exceeding 40 wt.%. It has been found from the measurement results that a master batch using 60 wt.% of EEA and 40 wt.% of the acid acceptor in combination and prepared using a twin screw extruder has the highest effect for inhibiting generation of hydrochloric acid.

### (Dispersibility of acid acceptor)

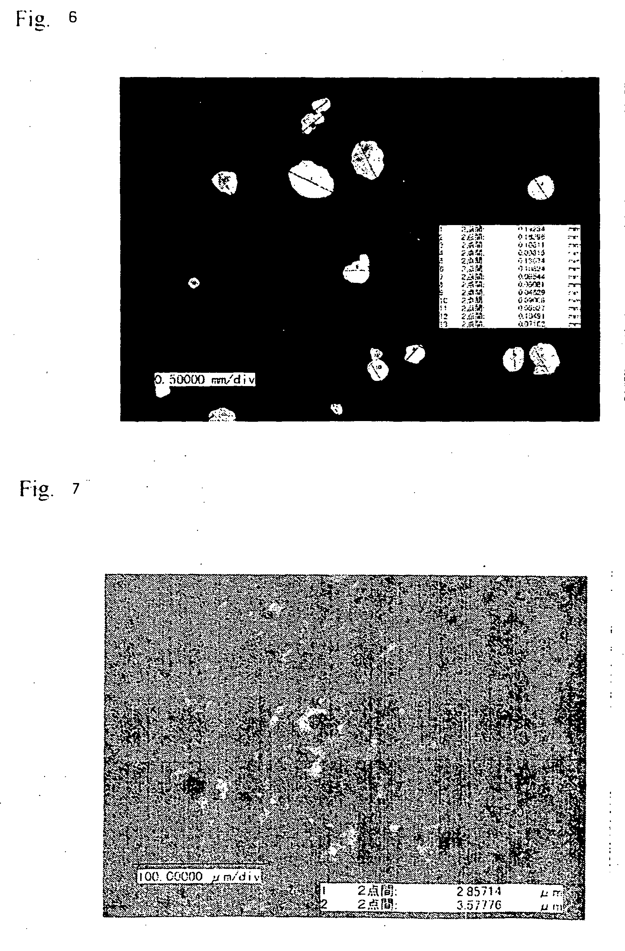

A difference in dispersibility of the acid acceptor between the master batch prepared by twin screw extruder and granulate prepared by a super mixer was observed after magnification using a CCD camera. A master batch cannot be prepared in a twin screw kneader when the ratio of the acid acceptor exceeds 40 wt.% so that in this case, the mixture is granulated in a super mixer. As illustrated in FIG. 6, it is not dispersed sufficiently and has remained as agglomerates. In the granulate prepared by a super mixer, acid acceptors are not dispersed sufficiently and agglomerates of about 50 times as large as those of the master batch are recognized. From the master batch prepared in a twin screw extruder, on the other hand, almost no agglomerate of the acid acceptor is found as shown in FIG. 7, meaning that acid acceptors are well dispersed.

### Example 7

### (Odor)

The odor was evaluated. As a result, it has been found that the odor of a recycling plastic material to which an acid acceptor has been added is weaker than the odor of a recycling plastic material to which an acid acceptor has not been added.

### (Preparation of evaluation sample)

As evaluation samples, a test plate obtained without adding an acid acceptor to a recycling plastic material, a test plate obtained by adding magnesium oxide as an acid acceptor, and a test plate obtained by adding a 75:25 mixture of magnesium oxide and hydrotalcite as an acid acceptor were prepared. Each test plate is 100 mm x 100 mm x 2 mm in size.

### (Evaluation method)

Intensity of odor from each plate was organoleptically evaluated by a panel of ten members not involved in the present invention. Evaluation was made in accordance with the following criteria: 3: the strongest odor among the three, 2: the intensity of the odor between 3 and 1, 1: the weakest odor among the three, 0: no odor. Evaluation results are shown in Table 5.

**[Table 5]**

| [unit: ppm] | | | |
|---|---|---|---|
| Member | [unit:ppm] No acid acceptor added | Magnesium oxide | Magnesium oxide:hydrotalcite = 75:25 |
| A | 3 | 2 | 1 |
| B | 3 | 2 | 1 |
| C | 3 | 2 | 1 |
| D | 3 | 2 | 1 |
| E | 3 | 1 | 2 |
| F | 3 | 2 | 1 |
| G | 2 | 3 | 1 |
| H | 3 | 2 | 1 |
| I | 3 | 2 | 1 |
| J | 3 | 1 | 2 |
| Total | 29 | 19 | 12 |

| | | | |
|---|---|---|---|
| In the above table, "3" means that a strong odor is emitted, "2" means that an odor is emitted, "1" means that an odor emitted is the weakest among these three, and "0" means no odor is emitted. | | | |

The results of the above-described organoleptic evaluation have revealed that the test plate to which an acid acceptor has not been added emits a stronger odor than the plate to which an acid acceptor has been added; and the odor emitted from the plate to which a mixture of magnesium oxide and hydrotalcite has been added is weaker than that emitted from the plate to which magnesium oxide has been added singly.

Addition of an acid acceptor in an amount of 0.1 wt.% or greater makes it possible to utilize waste plastic materials as a recycling plastic material.

## Claims

1. A method of inhibiting generation of hydrochloric acid during recycling of waste plastics such as discarded containers and wrapping made of plastic and discarded general plastic products when the waste plastics are used as a recycling plastic material, which comprises adding 0.1 wt.% or greater of an acid acceptor to the recycling plastic material, wherein magnesium oxide and hydrotalcite powders are used as the acid acceptor, a master batch is prepared by mixing the acid receptor with, as a base resin, an ethylene-ethyl acrylate copolymer or low density polyethylene powder, and the acid receptor in the powder form is mixed with the recycling plastic material.

2. A method of inhibiting generation of hydrochloric acid during recycling of waste plastics according to Claim 1, wherein the acid acceptor is a mixture of magnesium oxide and hydrotalcite and contains magnesium oxide at a greater ratio than hydrotalcite.

3. A method of inhibiting generation of hydrochloric acid during recycling of waste plastics according to Claim 1, wherein a ratio of the acid acceptor to the base resin is 40 wt. % or less.

## Patentansprüche

1. Verfahren zur Unterdrückung der Bildung von Salzsäure beim Recyclen von Kunststoffabfällen wie entsorgten Behältern und Verpackungsmaterial aus Kunststoff und entsorgten allgemeinen Kunststoffartikeln, wenn die Kunststoffmaterialien als Kunststoff zum Recyclen verwendet werden, welches das Hinzufügen von 0,1 Gew.-% oder mehr eines Säureakzeptors zu dem zu recyclenden Kunststoffmaterial umfasst, wobei Magnesiumoxid- und Hydrotalcit-Pulver als Säureakzeptoren verwendet werden, wobei ein Masterbatch hergestellt wird durch Mischen des Säureakzeptors mit einem Ethylenethylacrylatcopolymer oder einem Polyethylenpulver niedriger Dichte als Basisharz, und der Säureakzeptor in Pulverform mit dem zu recyclenden Kunststoffmaterial gemischt wird.

2. Verfahren zur Unterdrückung der Bildung von Salzsäure beim Recyclen von Kunststoffen gemäß Anspruch 1, wobei der Säureakzeptor eine Mischung aus Magnesiumoxid und Hydrotalcit ist und zu einem höheren Anteil aus Magnesiumoxid als aus Hydrotalcit besteht.

3. Verfahren zur Unterdrückung der Bildung von Salzsäure beim Recyclen von Kunststoffen gemäß Anspruch 1, wobei das Verhältnis des Säureakzeptors zum Basisharz 40 Gew-%. oder weniger beträgt.

## Revendications

1. Procédé inhibant la génération d'acide chlorhydrique pendant le recyclage des déchets de matière plastique, tels que les conteneurs ou les emballages mis au rebut constitués de matière plastique et de produits généraux en matière plastique mis au rebut lorsque les déchets de matière plastique sont utilisés comme matière plastique de recyclage, et comprenant l'ajout de 0,1 % en poids ou plus d'un accepteur d'acide à la matière plastique de recyclage, dans lequel des poudres d'oxyde de magnésium et d'hydrotalcite sont utilisées comme accepteur d'acide, un mélange maître est préparé en mélangeant le récepteur d'acide avec, comme résine de base, un copolymère d'éthylène éthyle acrylate ou une poudre de polyéthylène basse densité et le récepteur d'acide sous forme de poudre est mélangé avec la matière plastique de recyclage.

2. Procédé inhibant la génération d'acide chlorhydrique pendant le recyclage des déchets de matière plastique selon la revendication 1, dans lequel l'accepteur d'acide est un mélange d'oxyde de magnésium et d'hydrotalcite et contient de l'oxyde de magnésium dans une proportion supérieure à celle de l'hydrotalcite.

3. Procédé inhibant la génération d'acide chlorhydrique pendant le recyclage des déchets de matière plastique selon la revendication 1, dans lequel la proportion d'accepteur d'acide par rapport à la résine de base est de 40 % en poids ou inférieure.
